# FASCICULE DE BREVET EUROPEEN

(11) **EP 0 942 347 B1**
(45) Date de publication et mention de la délivrance du brevet: **03.09.2003**
(21) Numéro de dépôt: 99400503.1
(22) Date de dépôt: 02.03.1999
(51) Int. Cl.: G05D 23/02

(54) **Elément thermostatique à réponse rapide**
Schnellansprechender Thermostat
Fast response thermostat element

(30) Priorité: 09.03.1998 FR 9802843
(43) Date de publication de la demande: 15.09.1999
(73) Titulaire: VERNET S.A., 91291 Arpajon Cédex (FR)
(72) Inventeur: Chamot, Jean, 91290 Arpajon (FR); Henault, Claude, 78720 St Forget les Sablons (FR)
(74) Mandataire: Jacobson, Claude

(56) Documents cités:
- EP-A- 0 153 555
- EP-A- 0 783 096
- WO-A-97/23740
- US-A- 4 349 281

## Description

L'invention concerne un élément thermostatique du type comportant une coupelle de forme allongée contenant une matière notablement dilatable et contractile en fonction du sens de variation de sa température, et un piston mobile par rapport à la coupelle dans la direction longitudinale de celle-ci et couplé à la matière dilatable et contractile pour se déplacer en sens opposés selon que la matière se dilate ou se contracte.

De tels éléments thermostatiques sont utilisés notamment dans le domaine du réglage de la température d'un fluide issu du mélange de deux courants de fluide à des températures différentes, le mouvement relatif du piston et de la coupelle étant mis en oeuvre pour modifier la proportion du mélange des deux courants de fluide.

Pour un grand nombre d'applications dans ce domaine, il est nécessaire que la réponse de l'élément thermostatique soit très rapide, c'est-à-dire que la modification de la température du milieu dans lequel se trouve la coupelle entraîne à très bref délai un mouvement correspondant du piston. Cela est particulièrement le cas pour les éléments thermostatiques plongés dans un courant d'eau d'alimentation d'une installation sanitaire, application pour laquelle, une température idéale étant sélectionnée, une baisse de température de trois ou quatre degrés seulement est très désagréable, et une augmentation de quelques degrés peut être la cause de brûlures.

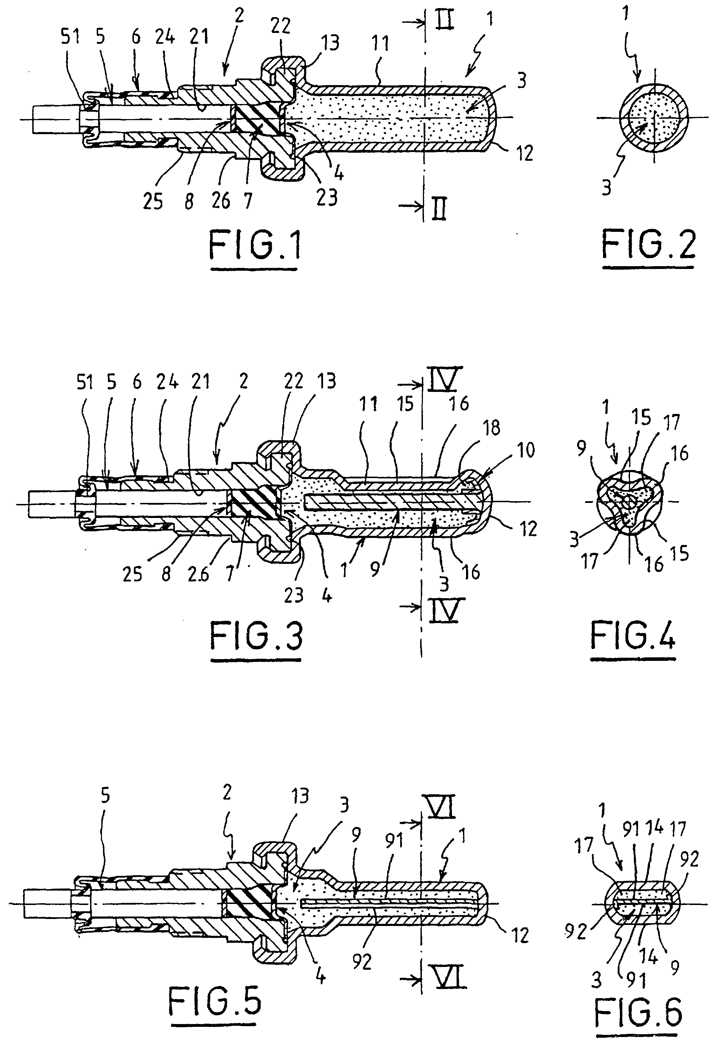

Les éléments thermostatiques utilisés classiquement dans ce type d'application comportent, par exemple conformément aux figures 1 et 2, une coupelle 1 métallique ayant une partie 11 présentant une forme générale cylindrique à section droite circulaire et dont une extrémité de fond 12 est fermée tandis que collerette 13, et un fourreau 2 ayant une forme de révolution avec un canal central 21 et une embase 22 logée dans la collerette de la coupelle de telle sorte qu'hormis l'embase 22, le fourreau 2 s'étende hors de la coupelle en direction opposée à la partie cylindrique 11 de celle-ci, et coaxialement ; la collerette 13 est sertie autour de l'embase 22.

La partie cylindrique 11 de la coupelle est emplie d'une masse de matière qui est très dilatable et contractile en fonction des variations de température notamment autour de la température ambiante habituelle, ici une masse de cire 3 ; l'embase 22 du. fourreau comporte dans sa face qui est en vis-à-vis de cette masse de cire, un logement annulaire 23 dans lequel est ancrée la périphérie d'un diaphragme 4 en forme de disque et déformable élastiquement, obturant le canal central 21 du fourreau du côté de la coupelle 1 ; à l'intérieur du canal 21 du fourreau, est logé un piston 5 assujetti aux mouvements de la région centrale du diaphragme, l'extrémité de ce piston opposée au diaphragme étant plus ou moins en saillie hors du fourreau en fonction du volume occupé par la cire, donc de la température de celle-ci ; un soufflet tubulaire 6 de protection entoure une partie du fourreau 2 et du piston 5, ses extrémités étant immobilisées dans des gorges 24, 51 creusées dans le pourtour de ces deux pièces ; ce soufflet 6, sous la forme d'une membrane souple à déroulement, suit les mouvements du piston sans déformation élastique. Le piston 5 est assujetti aux mouvements de la région centrale du diaphragme 4 par l'intermédiaire d'un tampon 7 en élastomère déformable en contact contre la surface du diaphragme opposée à la masse de cire et d'une rondelle 8 en polymère tel que du PTFE insérée entre le tampon et le piston et ajustée dans le canal 21 pour empêcher le fluage de l'élastomère du tampon autour du piston.

En vue de la solidarisation de l'élément thermostatique dans le thermostat qu'il est destiné à équiper, son fourreau 2 présente une région filetée 25 adaptée pour recevoir par exemple un écrou, et un épaulement 26 de telle sorte qu'une pièce support puisse être pincée entre l'épaulement et l'écrou éventuellement avec interposition d'un frein d'écrou.

La conception générale de ces éléments thermoplastiques est bien adaptée à l'utilisation d'une cire dont le coefficient de dilatation est très important par rapport à celui des fluides communs (environ 10 à 20 fois supérieur) et ainsi susceptible de provoquer un mouvement très ample du piston. Malheureusement, ces cires ont une très faible conductibilité thermique (environ 1000 fois inférieure à celle du cuivre), et ainsi la température de la masse entière de la cire ne reflète qu'imparfaitement et avec un grand retard celle du fluide qui baigne la coupelle ; pour cette raison, la cire est généralement « chargée » d'une poudre en matière présentant une bonne conductibilité thermique, par exemple une poudre de cuivre de granulométrie appropriée. Par simplification, dans la suite, on désignera par « cire » aussi bien les matières chargées que les mélanges non chargés et les cires à composant unique. Cependant, tous ces artifices sont insuffisants pour obtenir un élément thermostatique à réponse rapide utilisable sans précaution particulière dans une installation sanitaire.

L'invention a pour but de remédier à cet inconvénient, et de créer un élément thermostatique à réponse rapide qui soit de fabrication simple et pas sensiblement plus onéreuse que les éléments thermostatiques connus, et qui présente une bonne fiabilité.

A cette fin, l'invention concerne un élément thermostatique du type comportant une coupelle de forme allongée contenant une matière notablement dilatable et contractile en fonction du sens de variation de sa température, et un piston mobile par rapport à la coupelle dans la direction longitudinale de celle-ci et couplé à la matière dilatable et contractile pour se déplacer en sens opposés selon que la matière se dilate ou se contracte, élément thermostatique caractérisé en ce que la paroi latérale de la coupelle présente des plats ou des dépressions se succédant le long du tour de la coupelle et s'étendant dans sa direction longitudinale, délimitant un espace intérieur dont la section transversale, sur la longueur sur laquelle s'étendent les plats ou les dépressions, a une forme lobée, et en ce qu'un insert logé et solidarisé dans la coupelle s'étend dans la direction longitudinale de celle-ci.

Grâce au fait que la paroi latérale de la coupelle de l'élément thermostatique comporte des plats ou des dépressions se traduisant, en section transversale, par des lobes, la totalité de l'espace interne de la coupelle est peu éloignée de plusieurs régions de la paroi latérale, à l'exception de la région centrale de la coupelle ; cependant, grâce à un positionnement approprié de l'insert dans la coupelle, la quantité de cire ou analogue se trouvant dans cette région centrale peut être faible, et la plus grande partie de cette matière peut être localisée dans les lobes, ce qui permet une transmission rapide des variations de température du milieu extérieur à l'élément thermostatique, à la totalité de la masse de matière contenue dans la coupelle ; de plus, la quantité totale de matière qui a une mauvaise conductibilité thermique, est globalement inférieure.

L'élément thermostatique selon l'invention peut de plus présenter une ou plusieurs des caractéristiques suivantes :
- l'insert est en matériau bon conducteur de la chaleur ;
- l'insert est en matériau nettement plus mauvais conducteur de la chaleur que la matière dilatable et contractile ;
- la paroi latérale de la coupelle présente trois plats ou dépressions délimitant un espace intérieur de coupelle dont la section transversale présente trois lobes ;
- la paroi latérale de la coupelle présente deux plats ou dépressions délimitant un espace intérieur de coupelle dont la section transversale présente deux lobes s'étendant dans des directions opposées ;
- la paroi latérale de la coupelle présente plus de trois plats ou dépressions, délimitant un espace intérieur de coupelle dont la section transversale présente plus de trois lobes ;
- l'insert présente une forme générale cylindrique ;
- l'insert est constitué par une plaque ;
- l'insert est constitué par une plaque pliée comportant deux languettes parallèles ;
- l'insert présente une extrémité munie d'ailettes ;
- l'insert est soudé à la paroi latérale de la coupelle ;
- la coupelle comporte une région de fond présentant des cavités ;
- l'insert est soudé à une rondelle elle-même soudée à la coupelle ;
- l'insert comporte des ailettes logées dans des cavités de la coupelle.

D'autres caractéristiques et avantages de l'invention ressortiront de la description qui va suivre de formes de réalisation de l'invention décrites à titre d'exemples non limitatifs, faite en référence aux dessins joints dans lesquels :
- la figure 1 est une coupe longitudinale de l'élément thermostatique connu qui a été décrit plus haut,
- la figure 2 est une coupe transversale de l'élément thermostatique de la figure 1 selon la ligne II-II de cette figure,
- la figure 3 est une coupe longitudinale d'une première forme de réalisation d'un élément thermostatique selon l'invention,
- la figure 4 est une coupe transversale de l'élément thermostatique de la figure 3 selon la ligne IV-IV de cette figure,
- la figure 5 est une coupe longitudinale d'une deuxième forme de réalisation d'un élément thermostatique selon l'invention,
- la figure 6 est une coupe transversale de l'élément thermostatique de la figure 5 selon la ligne VI-VI de cette figure,
- la figure 7 est une coupe longitudinale d'une troisième forme de réalisation d'un élément thermostatique selon l'invention, et
- les figures 8 et 9 sont des coupes transversales de l'élément thermosatique de la figure 7 selon respectivement les lignes VIII-VIII et IX-IX de cette figure.

L'élément thermostatique connu des figures 1 et 2 ayant été décrit plus haut ne le sera pas à nouveau, et les organes des éléments thermostatiques selon l'invention qui correspondent à des organes de l'élément connu portent les mêmes repères numériques.

Comme l'élément thermostatique connu, les éléments thermostatiques selon l'invention représentés sur les figures 3 à 9 comportent une coupelle 1 métallique ayant une partie 11 présentant une forme allongée emplie d'une masse de matière essentiellement dilatable et rétractile 3 telle que de la cire, dont une extrémité de fond 12 est fermée tandis que l'extrémité opposée s'épanouit pour se raccorder à une collerette 13, et un fourreau 2 ayant une forme de révolution avec un canal central 21 et une embase 22 logée dans la collerette de la coupelle, la collerette 13 étant sertie autour de l'embase 22, et la coupelle et le fourreau s'étendant coaxialement dans des directions opposées.

Egalement, l'embase 22 du fourreau comporte dans sa face qui est en vis-à-vis de la masse ici de cire, un logement annulaire 23 dans lequel est ancrée la périphérie d'un diaphragme 4 en forme de disque et déformable élastiquement, obturant le canal 21 du côté de la coupelle ; à l'intérieur du fourreau, est aussi logé un piston 5 assujetti au mouvement de la région centrale du diaphragme, l'extrémité du piston opposée au diaphragme étant plus ou moins en saillie hors au fourreau en fonction du volume occupé par la cire, donc de sa température ; on trouve encore un soufflet tubulaire 6 de protection entourant une partie du fourreau 2 et du piston 5, dont les extrémités sont immobilisées dans des gorges 24, 51 creusées dans le pourtour de ces deux pièces ; le soufflet, sous la forme d'une membrane souple à déroulement, suit les mouvements du piston sans déformation élastique. Le piston 5 est lui aussi assujetti aux mouvements de la région centrale du diaphragme 5 par l'intermédiaire d'un tampon 7 en élastomère déformable en contact contre la surface du diaphragme opposée à la masse de cire et d'une rondelle 8 en polymère telle que du PTFE insérée entre le tampon et le piston et ajustée dans le canal 21.

Le fourreau 2 présente une région filetée 25 pour recevoir un écrou de solidarisation, et un épaulement de butée 26.

En revanche, contrairement aux éléments thermostatiques connus, le pourtour de la coupelle 2 présente des plats 14 (figures 5 et 6) ou encore une succession de dépressions 15 (figures 3, 4, 7, 8, 9) définissant entre elles des régions en relief 16, s'étendant longitudinalement depuis la proximité du fond 12 jusqu'à la proximité de la collerette 13. Ces plats ou ces dépressions et ces reliefs se succédant le long du tour ou périmètre de la coupelle, par suite de l'épaisseur approximativement constante de la paroi de celle-ci, délimitent un espace intérieur dont la section transversale par un plan perpendiculaire à l'axe longitudinal du piston 5 et ainsi à la direction dans laquelle s'étendent le piston et la coupelle présente une forme lobée, et cela sur toute la longueur sur laquelle s'étendent les plats 14 ou les dépressions 15 et les reliefs 16.

De plus, également selon l'invention, la coupelle renferme un insert 9 fixé à sa surface intérieure et s'étendant depuis son fond 12 jusqu'à proximité de sa collerette 13.

De préférence, la coupelle, le fourreau et le piston sont en métal bon conducteur de la chaleur ; par exemple, pour des raisons mécaniques, la coupelle est en cuivre, tandis que le fourreau et le piston sont en laiton.

Les figures 3 et 4 montrent un élément thermostatique dont la paroi latérale de la coupelle 13 présente trois dépressions 15 délimitant deux à deux trois reliefs 16 de telle sorte qu'en section transversale droite soient définis trois lobes 17 répartis à 120°.

L'insert 9 logé dans la coupelle est ici une pièce en métal bon conducteur de la chaleur, par exemple une tige cylindrique en cuivre s'étendant dans l'axe du piston 5, et dont une extrémité est soudée directement dans le fond de la coupelle et/ou à une bague 10 elle-même soudée au fond de la coupelle, tandis que l'autre extrémité est en porte-à-faux à proximité de la collerette. On notera la très faible distance qui sépare l'insert de la paroi latérale de la coupelle.

De préférence, les dépressions 15 sont réalisées par déformation du pourtour de la coupelle initialement de forme générale cylindrique comme sur les figures 1 et 2, sur seulement une partie de sa longueur s'étendant entre son fond et sa collerette, et ainsi la région du fond 12 de la coupelle présente trois cavités 18 réparties à 120° et conserve une section droite approximativement circulaire dans laquelle s'étend l'éventuelle bague 10 de fixation.

Les figures 5 et 6 montrent un élément thermostatique dont la paroi latérale de la coupelle 1 présente deux plats 14 parallèles de telle sorte qu'en section transversale droite soient définis deux lobes 17 s'étendant dans des directions opposées.

L'insert 9 logé dans la coupelle peut être ici une plaque sensiblement plane, orientée selon un plan s'étendant diamétralement le long du piston 5 parallèlement aux deux plats 14 et à égale distance entre ceux-ci, soudée latéralement, par exemple par ses chants, à la paroi latérale de la coupelle ; l'une de ses extrémités est en appui contre le fond de la coupelle et l'autre est libre à proximité de la collerette 13. En variante, comme sur les figures, la plaque peut être pliée approximativement en Z de manière à définir de part et d'autre des faces 91 d'une grande aile, deux languettes 92 perpendiculaires à cette aile, s'étendant parallèlement l'une à l'autre ; dans cette forme de réalisation, les languettes 92 sont soudées à la paroi latérale de la coupelle ; là encore, l'une des extrémités de la plaque formant insert 9 ainsi constituée est en appui contre le fond 12 et l'autre est à proximité de la collerette 13.

Dans cette forme de réalisation comme dans celle des figures 3 et 4, l'insert 9 est métallique, par exemple en cuivre ou en alliage de cuivre, ou de manière générale en matériau bon conducteur de la chaleur, de sorte que d'une part, il remplace dans le volume de la coupelle, une quantité de cire mauvaise conductrice, et d'autre part, il contribue à la répartition rapide et homogène de la chaleur sur toute la surface de la masse de cire qui est en contact avec lui.

Cependant, il est également possible de réaliser l'insert en matériau très mauvais conducteur de la chaleur, ce qui entraîne également que la quantité de cire dans la coupelle est réduite, et de plus que l'énergie calorifique transmise à la coupelle est tout d'abord très majoritairement transmise à la masse de cire dont la conductibilité thermique est nettement supérieure à celle de l'insert qui présente ainsi une grande inertie thermique.

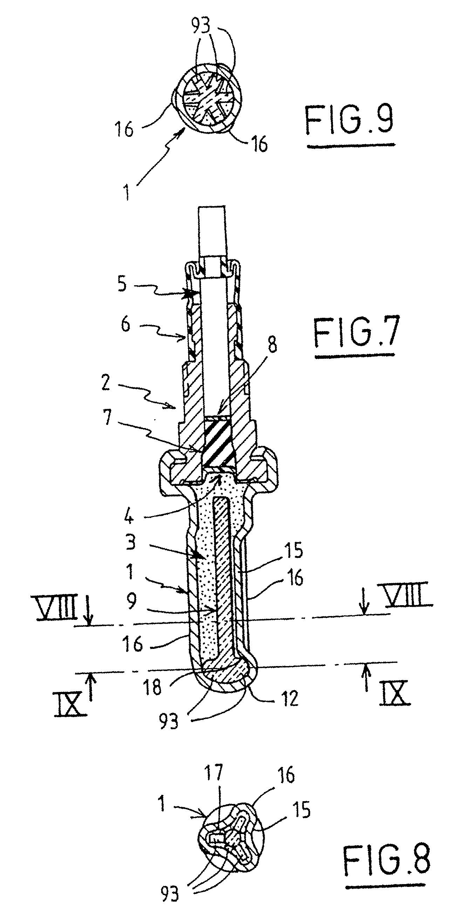

Une forme de réalisation bien adaptée pour la réception d'un insert thermiquement isolant est représentée sur les figures 7 à 9 où l'élément thermostatique comporte une coupelle 1 identique à celle de l'élément thermostatique des figures 3 et 4.

Dans cette forme de réalisation, l'insert 9 est une pièce allongée en matériau très mauvais conducteur de la chaleur, cylindrique sur la plus grande partie de sa longueur jusqu'à son extrémité libre à proximité de la collerette, mais présentant à son extrémité opposée, des ailettes 93 s'étendant radialement, se traduisant, en section droite de l'insert, par une forme en étoile.

Comme dans la forme de réalisation des figures 3 et 4, la partie cylindrique de l'insert 9 s'étend le long du même axe que le piston 5 ; de préférence, l'insert comporte six ailettes 93 dans le cas d'une coupelle 1 à trois dépressions 15 et trois reliefs 16, de telle sorte que trois ailettes puissent être orientées dans l'axe des lobes 17 et trois autres soient maintenues dans les trois cavités 18 même en l'absence d'autres moyens de fixation de l'insert dans la coupelle.

Dans toutes ces formes de réalisation, il résulte de la forme lobée et de la présence de l'insert 9, un temps de réponse de l'élément thermostatique qui est beaucoup plus bref que celui des éléments thermostatiques antérieurs et notamment de l'élément des figures 1 et 2.

Naturellement, dans tout ce qui précède, on a mentionné un mouvement du piston 5 dans le fourreau 2, mais, dans les applications pratiques, il n'est pas nécessaire que la coupelle et le fourreau soient maintenus fixes et que ce soit le piston qui soit réellement mobile, et dans nombre d'applications, c'est le piston 5 qui est maintenu fixe tandis que le fourreau 2 et la coupelle 1 sont mobiles, les mouvements mentionnés étant des mouvements relatifs.

Typiquement, dans les formes de réalisation à plus de deux lobes, dans la partie de la coupelle dans laquelle s'étendent les plats ou les dépressions, en section transversale, les lobes s'étendent à partir d'un espace circulaire présentant un diamètre de l'ordre de 2,5 à 3 mm, et le cercle circonscrit à la surface extérieure de la coupelle présente un diamètre de 8 à 9 mm.

Cependant, bien entendu, l'invention n'est pas limitée aux formes de réalisation ci-dessus décrites et représentées, et on pourra en prévoir d'autres sans sortir de son cadre ; on pourra prévoir notamment des formes de réalisation présentant des dimensions différentes appropriées à l'application spécifique du produit, et des formes d'insert 9 très diverses, ainsi que des coupelles présentant plus de deux ou trois plats 14 ou dépressions 15 et ainsi une section à plus de deux ou trois lobes 17.

## Revendications

1. Elément thermostatique du type comportant une coupelle (1) de forme allongée contenant une matière (3) notablement dilatable et contractile en fonction du sens de variation de sa température, et un piston (5) mobile par rapport à la coupelle dans la direction longitudinale de celle-ci et couplé à la matière dilatable et contractile pour se déplacer en sens opposés selon que la matière se dilate ou se contracte, élément thermostatique **caractérisé en ce que** la paroi latérale de la coupelle présente des plats (14) ou des dépressions (15) se succédant le long du tour de la coupelle et s'étendant dans sa direction longitudinale, délimitant un espace intérieur dont la section transversale, sur la longueur sur laquelle s'étendent les plats ou les dépressions, a une forme lobée, et **en ce qu'**un insert (9) logé et solidarisé dans la coupelle (1) s'étend dans la direction longitudinale de celle-ci.

2. Elément thermostatique selon la revendication 1, **caractérisé en ce que** l'insert (9) est en matériau bon conducteur de la chaleur.

3. Elément thermostatique selon la revendication 1, **caractérisé en ce que** l'insert (9) est en matériau nettement plus mauvais conducteur de la chaleur que la matière (3) dilatable et contractile.

4. Elément thermostatique selon la revendication 1, **caractérisé en ce que** la paroi latérale de la coupelle (1) présente trois plats (14) ou dépressions (15) délimitant un espace intérieur de coupelle dont la section transversale présente trois lobes (17).

5. Elément thermostatique selon la revendication 1, **caractérisé en ce que** la paroi latérale de la coupelle (1) présente deux plats (14) ou dépressions (15) délimitant un espace intérieur de coupelle dont la section transversale présente deux lobes (17) s'étendant dans des directions opposées.

6. Elément thermostatique selon la revendicaiton 1, **caractérisé en ce que** la paroi latérale de la coupelle (1) présente plus de trois plats (14) ou dépressions (15), délimitant un espace intérieur de coupelle dont la section transversale présente plus de trois lobes (17).

7. Elément thermostatique selon la revendication 1, **caractérisé en ce que** l'insert (9) présente une forme générale cylindrique.

8. Elément thermostatique selon la revendication 1, **caractérisé en ce que** l'insert (9) est constitué par une plaque.

9. Elément thermostatique selon la revendication 8, **caractérisé en ce que** l'insert (9) est constitué par une plaque pliée comportant deux languettes (92) parallèles.

10. Elément thermostatique selon la revendication 1, **caractérisé en ce que** l'insert (9) présente une extrémité munie d'ailettes (93).

11. Elément thermostatique selon la revendication 1, **caractérisé en ce que** l'insert (9) est soudé à la paroi latérale de la coupelle (1).

12. Elément thermostatique selon la revendication 1, **caractérisé en ce que** la coupelle (1) comporte une région de fond (12) présentant des cavités (18).

13. Elément thermostatique selon la revendication 1, **caractérisé en ce que** l'insert (9) est soudé à une rondelle (10) elle-même soudée à la coupelle (1).

14. Elément thermostatique selon la revendication 1, **caractérisé en ce que** l'insert (9) comporte des ailettes (93) logées dans des cavités (18) de la coupelle (1).

## Patentansprüche

1. Thermostat, umfassend eine länglich geformte Kappe (1), die ein Material (3) enthält, das je nach Änderungsrichtung seiner Temperatur ausdehnbar und zusammenziehbar ist, und einen Kolben (5), der relativ zur Kappe in deren Längsrichtung beweglich ist und mit dem ausdehnbaren und zusammenziehbaren Material gekoppelt ist, um sich in entgegengesetzte Richtungen zu bewegen, je nachdem, ob das Material sich ausdehnt oder zusammenzieht, **dadurch gekennzeichnet, dass** die Seitenwand der Kappe Flachstellen (14) oder Vertiefungen (15) aufweist, die entlang des Umfangs der Kappe aufeinanderfolgen und in ihrer Längsrichtung verlaufen, wobei sie einen Innenraum begrenzen, dessen Querschnitt auf der Länge, auf welcher die Flachstellen oder Vertiefungen verlaufen, eine gelappte Form aufweist, und dass ein Einsatz (9), der in der Kappe (1) aufgenommen wird und mit dieser fest verbunden ist, in deren Längsrichtung verläuft.

2. Thermostat nach Anspruch 1, **dadurch gekennzeichnet, dass** der Einsatz (9) aus einem gut wärmeleitenden Material besteht.

3. Thermostat nach Anspruch 1, **dadurch gekennzeichnet, dass** der Einsatz (9) aus einem Material besteht, das deutlich schlechter wärmeleitend ist als das ausdehnbare und zusammenziehbare Material (3).

4. Thermostat nach Anspruch 1, **dadurch gekennzeichnet, dass** die Seitenwand der Kappe (1) drei Flachstellen (14) oder Vertiefungen (15) aufweist, die einen Innenraum der Kappe begrenzen, dessen Querschnitt drei Lappen (17) aufweist.

5. Thermostat nach Anspruch 1, **dadurch gekennzeichnet, dass** die Seitenwand der Kappe (1) zwei Flachstellen (14) oder Vertiefungen (15) aufweist, die einen Innenraum der Kappe begrenzen, dessen Querschnitt zwei Lappen (17) aufweist, die in entgegengesetzte Richtungen verlaufen.

6. Thermostat nach Anspruch 1, **dadurch gekennzeichnet, dass** die Seitenwand der Kappe (1) mehr als drei Flachstellen (14) oder Vertiefungen (15) aufweist, die einen Innenraum der Kappe begrenzen, dessen Querschnitt mehr als drei Lappen (17) aufweist.

7. Thermostat nach Anspruch 1, **dadurch gekennzeichnet, dass** der Einsatz (9) eine allgemein zylindrische Form aufweist.

8. Thermostat nach Anspruch 1, **dadurch gekennzeichnet, dass** der Einsatz (9) aus einer Platte besteht.

9. Thermostat nach Anspruch 8, **dadurch gekennzeichnet, dass** der Einsatz (9) aus einer gefalzten Platte besteht, die zwei parallele Zungen (92) aufweist.

10. Thermostat nach Anspruch 1, **dadurch gekennzeichnet, dass** der Einsatz (9) ein mit Flügeln (93) versehenes Ende aufweist.

11. Thermostat nach Anspruch 1, **dadurch gekennzeichnet, dass** der Einsatz (9) an die Seitenwand der Kappe (1) angeschweißt ist.

12. Thermostat nach Anspruch 1, **dadurch gekennzeichnet, dass** die Kappe (1) einen Bodenbereich (12) umfasst, der Hohlräume (18) aufweist.

13. Thermostat nach Anspruch 1, **dadurch gekennzeichnet, dass** der Einsatz (9) an eine Scheibe (10) angeschweißt ist, die ihrerseits an die Kappe (1) angeschweißt ist.

14. Thermostat nach Anspruch 1, **dadurch gekennzeichnet, dass** der Einsatz (9) Flügel (93) umfasst, die in Hohlräumen (18) der Kappe (1) aufgenommen werden.

## Claims

1. Thermostatic element of the type comprising a cap (1) of elongated shape containing a material (3) which is in particular expandable and contractible as a function of the direction of variation of its temperature, and a piston (5) which is movable with respect to the cap in the longitudinal direction of the latter and is coupled to the expandable and contractible material in order to be displaced in opposite directions according to whether the material is expanding or contracting, the said thermostatic element being **characterised in that** the lateral wall of the cap has flat areas (14) or depressions (15) which succeed one another along the contour of the cap and extend in its longitudinal direction, delimiting an internal space of which the cross-section over the length of which the flat areas or depressions extend has a lobed shape, and that an insert (9) accommodated and fastened in the cap (1) extends in the longitudinal direction thereof

2. Thermostatic element as claimed in Claim 1, **characterised in that** the insert (9) is made from a material which is a good conductor of heat.

3. Thermostatic element as claimed in Claim 1, **characterised in that** the insert (9) is made from a material which is a considerably poorer conductor of heat than the expandable and contractible material (3).

4. Thermostatic element as claimed in Claim 1, **characterised in that** the lateral wall of the cap (1) has three flat areas (14) or depressions (15) delimiting an internal cap space of which the cross-section has three lobes (17).

5. Thermostatic element as claimed in Claim 1, **characterised in that** the lateral wall of the cap (1) has two flat areas (14) or depressions (15) delimiting an internal cap space of which the cross-section has two lobes (17) extending in opposite directions.

6. Thermostatic element as claimed in Claim 1, **characterised in that** the lateral wall of the cap (1) has more than three flat areas (14) or depressions (15) delimiting an internal cap space of which the cross-section has more than three lobes (17).

7. Thermostatic element as claimed in Claim 1, **characterised in that** the insert (9) has a generally cylindrical shape.

8. Thermostatic element as claimed in Claim 1, **characterised in that** the insert (9) is formed by a plate.

9. Thermostatic element as claimed in Claim 8, **characterised in that** the insert (9) is formed by a folded plate having two tabs (92).

10. Thermostatic element as claimed in Claim 1, **characterised in that** the insert (9) has an end provided with fins (93).

11. Thermostatic element as claimed in Claim 1, **characterised in that** the insert (9) is welded to the lateral wall of the cap (1).

12. Thermostatic element as claimed in Claim 1, **characterised in that** the cap (1) has a bottom region (12) having cavities (18).

13. Thermostatic element as claimed in Claim 1, **characterised in that** the insert (9) is welded to a washer (10) which is itself welded to the cap (1).

14. Thermostatic element as claimed in Claim 1, **characterised in that** the insert (9) has fins (93) accommodated in cavities (19) in the cap (1).
